# EUROPEAN PATENT SPECIFICATION

(11) **EP 0 519 894 B1**
(45) Date of publication and mention of the grant of the patent: **13.09.1995**
(21) Application number: 92850145.1
(22) Date of filing: 16.06.1992
(51) Int. Cl.: B62D 33/037

(54) **Platform stanchion and method of mounting a locking and actuator mechanism therein**
Runge für eine Ladefläche und Methode zum Montieren einer Schliess- und Beeinflussungsvorrichtung in dieser
Montant pour plateforme et procédé pour le montage d'un mécanisme de serrage et actionnement logé dans le montant

(30) Priority: 19.06.1991 SE 9101889
(43) Date of publication of application: 23.12.1992
(73) Proprietor: VBG Produkter AB, S-462 00 Vänersborg (SE)
(72) Inventor: Andersson, Ragnvald, S-467 00 Gränstorp (SE)
(74) Representative: Rostovanyi, Peter

(56) References cited:
- EP-A- 0 267 173
- WO-A-90/15213
- SE-B- 456 491
- US-A- 3 558 182

## Description

The present invention relates to a platform stanchion for maintaining the platform sides of a vehicle in an upright position of use, and more specifically to a platform stanchion of the type stated in the preamble of appended claim 1.

The invention also relates to a method of mounting a locking and actuator mechanism in such a stanchion.

A large variety of platform stanchions are known in the art, which have locking devices for releasably maintaining the sides of a truck platform. Such a stanchion is known, e.g. from SE-B-222,820, in which locking means in the form of catches are pivotally mounted in the tubular stanchion. The catches are shifted between a swung-out locking position and a swung-in inoperative position by means of actuator rods or links operated by a handle at the lower end of the stanchion.

A similar platform stanchion is known from US-A-3,558,182, where the catches are operated by means of a locking and actuator mechanism disposed inside the tubular stanchion and equipped with a spring-loaded handle which is accommodated in a recess in the front side of the stanchion and which can be folded out therefrom. This type represents the closest prior art as laid down in the preamble of claim 1.

Also, EP-A-0,267,173 describes a platform stanchion which is detachably mounted on a stanchion attachment at the platform edge and which contains a handle-operated locking and actuator mechanism for operating the catches.

SE-B-456,491 describes a similar tubular platform stanchion with an exchangeable handle which, by the intermediary of a link and articulation mechanism, can be connected to an actuator rod which is axially movable inside the stanchion for operating the locking means.

Although the two last-mentioned platform stanchions function quite satisfactorily, they suffer from a few shortcomings, which are also encountered in the two first-mentioned stanchion designs. For instance, these known stanchions are comparatively complicated and thus expensive to manufacture. Thus, one sets out from a steel section which is U-shaped in cross-section and in which the interior mechanism, i.e. the catches, links, rods etc., is disposed. The stanchion rear side is then welded to the U-section for closing the space accommodating the interior components. Generally, the stanchion ends must also be welded. In the case of long stanchions, the whole assembling procedure, especially the longitudinal welding, takes quite a long time. Because of the welding, the stanchion must be further processed, e.g. straightened and ground. The welding also involves the disadvantage that welding sparks may fly into the stanchion and adhere to it. Besides, it is difficult to ensure a completely axial movement of the actuator rods which are to operate the catches. Further, the articulations between the actuator rods and the catches and handle, respectively, may be sensitive to play and jamming. Generally, the interior of the known stanchions is unnecessarily complicated.

The stanchions described above are long stanchions having a height above about 600 mm. These stanchions are secured to the platform edge by means of an articulated wedge attachment and are tilted outwards therefrom when to detach the stanchion. Shorter stanchions, e.g. for lighter trucks, are usually secured to the platform edge by means of a vertical attachment or socket, whence the stanchion can be drawn up for removal. In this case, a slight play often exists between the stanchion and the stanchion attachment because of inaccurate tolerances.

In view hereof, the trade has experienced a need for an improved platform stanchion which is easier and thus less expensive to manufacture. A special desideratum is a lightweight stanchion, preferably with a casing a light metal, such as aluminium. Prior-art platform stanchions of this type consist almost exclusively of steel and hence are relatively heavy.

One object of the present invention is to overcome the above-mentioned drawbacks by providing a lightweight platform stanchion for holding platform sides, which is easily manufactured in a few working operations without the need of any welding.

Another object is to provide a tubular platform stanchion whose interior contains but a few simple components with a limited number of articulations therebetween.

Yet another object is to provide a platform stanchion whose casing is made in one piece and whose interior components can be mounted from outside.

A further object is to provide a platform stanchion which can be connected without any play to a stanchion attachment on the edge portion of the vehicle platform.

Another object of the invention is to provide a method of mounting from outside a locking and actuator mechanism in a platform stanchion of the above-mentioned type.

These and other objects, which will appear from the following description, have now been achieved by means of a platform stanchion which is of the type described by way of introduction and which, additionally, has the features stated in the characterising clause of appended claim 1. Preferred embodiments of the platform stanchion according to the invention are stated in dependent claims 2-9.

The above-mentioned objects are also achieved by a method as stated in appended claim 10.

The invention will now be described in more detail with reference to the accompanying drawings showing an embodiment thereof.

Fig. 1 is a plan view of the platform stanchion according to the invention.

Fig. 2 is a side view of the stanchion.

Fig. 3 is a plan view similar to Fig. 1, but with certain portions removed.

Fig. 4 is a section taken along the line IV-IV in Fig. 3.

Fig. 5 is a section taken along the line V-V in Fig. 3.

Fig. 6 is a section taken along the line VI-VI in Fig. 3.

Fig. 7 is a section taken along the line VII-VII in Fig. 3.

Fig. 8 is a section taken along the line VIII-VIII in Fig. 3.

Fig. 9 is a section taken along the line IX-IX in Fig. 3.

Fig. 10 is a section taken along the line X-X in Fig. 4.

Figs 11-13 schematically show the mounting of a sealing member.

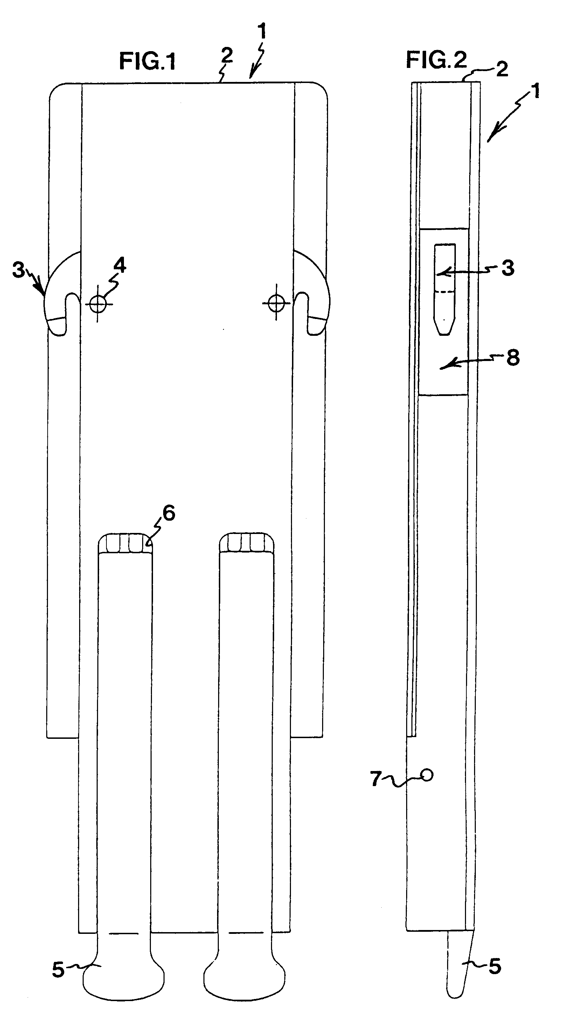

Figs 1-2 show a platform stanchion according to the invention, generally designated 1. The stanchion is a side stanchion for holding two sideboards (not shown). Since the stanchion 1 is symmetrical, only one half thereof will be described in more detail here. Like parts will have like reference numerals hereinbelow.

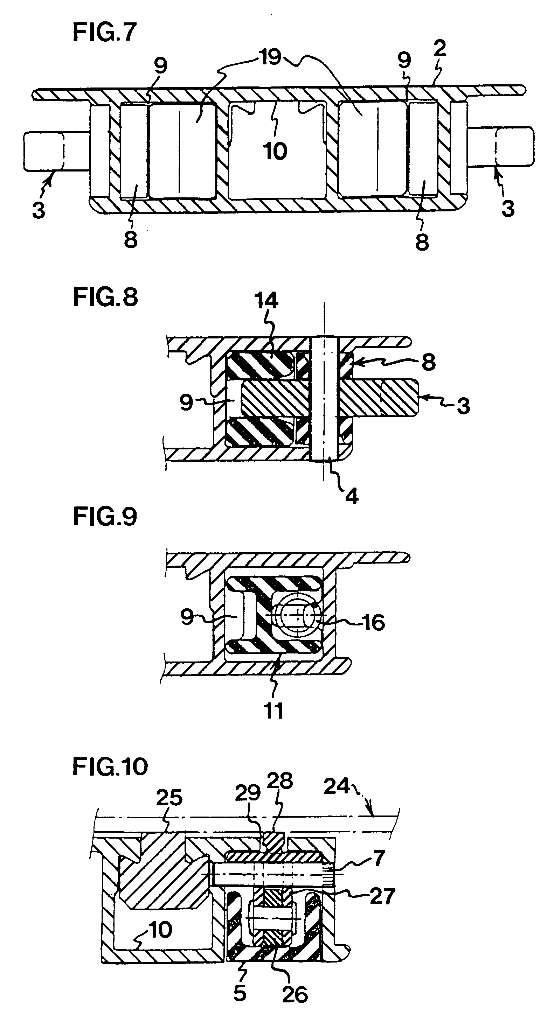

The tubular platform stanchion 1 has a body or casing 2 formed as an integral piece, preferably consisting of an extruded aluminium section whose cross-sectional shape appears from Fig. 7. The casing 2 may however also consist of plastic or of composite materials. The stanchion 1 is provided on each side with a locking means, generally designated 3, which is in the form of a catch pivotally mounted on a bearing pin 4 connected to the casing 2. An operating handle 5 is recessed in an elgonate opening 6 in the front side of the casing 2. The handle 5 is mounted, by the intermediary of a link mechanism described in more detail below, on a bearing pin 7 fixedly connected to the casing 2.

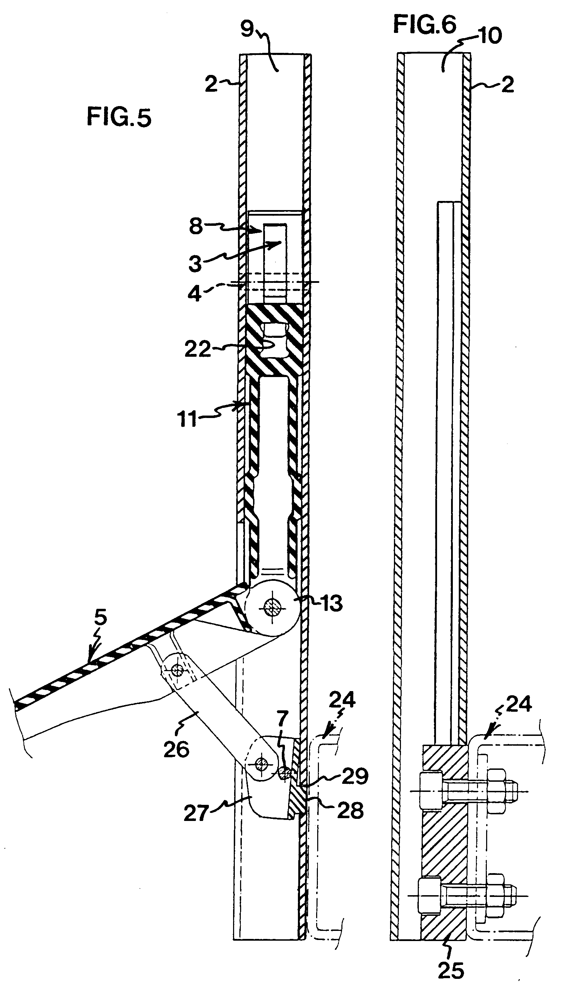

Between the catch 3 and the handle 5, there is provided within the casing 2 an actuator mechanism which will be described in more detail below. In the operative position or locking position (Fig. 1), the catch 3 engages in conventional manner in a locking recess in the adjoining edge portion (not shown) of the folded-up platform side for holding it. The handle 5 then is in the folded-in position. When the handle 5 is folded out (Fig. 5), the catch 3 is swung back into the casing 2 out of its engagement with the locking recess in the platform side so as to release this.

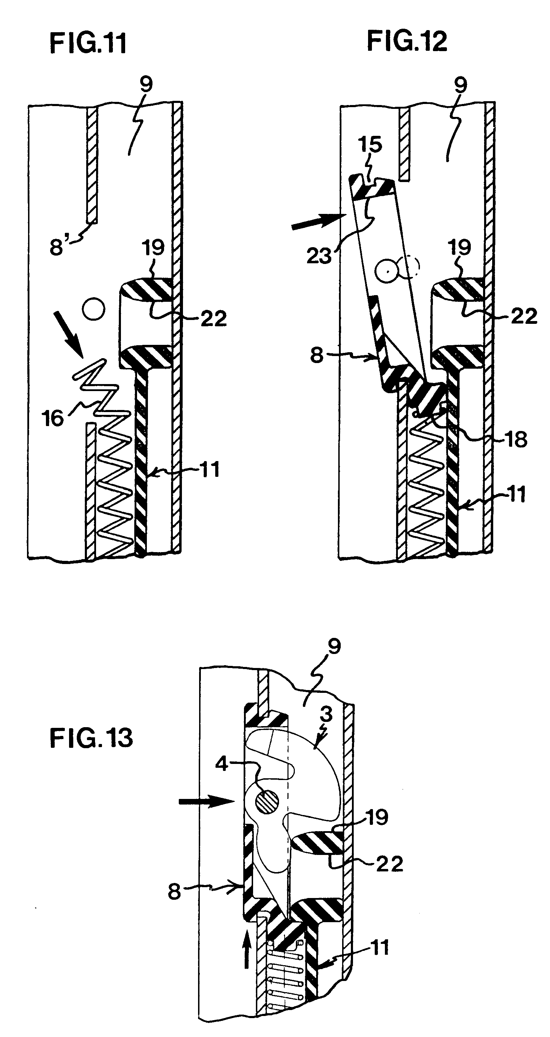

Fig. 2 further shows a sealing member, generally designated 8, which is mounted in a recess 8′ (Fig. 11) in the longitudinal edge portion of the casing 2 and encloses the catch 3. The function of the sealing member 8 will be discussed in more detail later on.

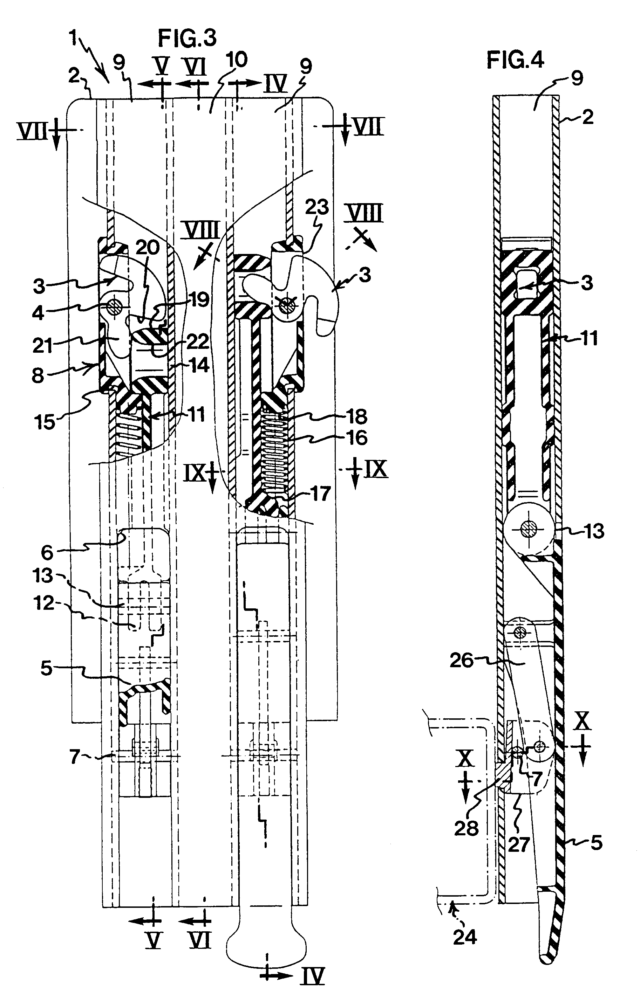

Fig. 3 shows the platform stanchion 1 with certain portions broken away to make the stanchion interior visible. As also appears from Fig. 7, the aluminium casing 2 has two identical, longitudinal channels 9 and one central channel 10. The central channel 10 comprises at its lower end means for cooperating with a stanchion attachment on the edge portion of the platform, which will be described in more detail hereinafter. The two side channels 9 accommodate actuator mechanisms for each catch 3. The actuator mechanism disposed between the catch 3 and the handle 5 comprises a slide member, generally designated 11, whose lower end portion 12, by articulation means 13 (Fig. 5), is connected to the upper end of the handle 5, and whose upper end portion 14 is located adjacent the catch 3. The slide member 11 is completely axially movable in the channel 9 by operation of the handle 5. The sealing member 8 has grooves 15 for snap engagement with the edges of the recess 8′ in the longitudinal edge portion of the casing 2. The pin 4 extends through the catch 3 and is connected by frictional engagement with the sealing member 8.

The handle 5 is spring-loaded outwards by a compression spring 16 mounted in the channel 9 between a shoulder 17 on the lower end portion 12 of the slide member 11 and an abutment 18 formed on the sealing member 8 and extending into the channel 9.

The platform stanchion 1 with the associated locking and actuator mechanism is intended to be used as follows. In the inoperative position, i.e. the position to the left in Fig. 3, the catch 3 has been swung into the casing 2 and is almost completely within the channel 9. The handle 5 then is in the folded-out position (Fig. 5). When the handle 5 is folded inwards, the slide member 11 is axially displaced upwards in the channel 9 against the action of the spring 16. The free end of the upper end portion 14 of the slide member 11 forms a first cam surface 19 which initially engages a corresponding first cam surface 20 on the catch 3. During the continued folding of the handle 5 inwards, the catch 3 is swung counterclockwise about the pin 4, with the cooperating cam surfaces 19, 20 engaging each other. Concurrently, a tooth-shaped projection 21 on the catch 3 is swung into a transverse through recess 22 in the upper end portion 14 of the slide member 11. The inner boundary surfaces of the recess 22 thus form second cam surfaces for engaging corresponding outer cam surfaces of the tooth-shaped projection 21. When the handle 5 is in its fully folded-in position, the slide member 11 is in its upper position and the catch 3 is in its fully swung-out position for locking engagement with the platform side. The catch 3 is maintained in this fully swung-out position thanks to the engagement between the inner, upwardly directed cam surface of the recess 22 and the corresponding, downwardly directed cam surface of the tooth-shaped projection 21, as shown to the right in Fig. 3. The compression spring 16 here is under maximum compression.

When the handle 5 is folded outwards from this position, the slide member 11 is pulled downwards and the catch 3 is swung inwards because of the cam engagement between the inner, downwardly directed cam surface of the recess 22 and the corresponding cam surface of the tooth-shaped projection 21. Thus, the catch 3 is operated in an extremely reliable fashion by a completely axial displacement of the slide member 11 in the channel 9 between distinct positions. No links or articulations are provided between the slide member 11 and the catch 3, which confers special advantages, as will be discussed in more detail hereinafter. A further advantage is that the slide member 11 is guided in a highly reliable manner against the inner walls of the guide channel 9.

As best seen in Figs 7-8, the upper end portion 14 of the slide member 11 has such cross-sectional dimensions that it substantially fills, together with a part of the sealing member 8, the guide channel 9 in the area of the catch 3. Thus, a highly reliable axial guidance of the slide member 11 is achieved. Since the recess 22 in the upper end portion 14 of the slide member 11 has such cross-sectional dimensions that the tooth-shaped projection 21 of the catch 3 substantially fills the recess 22 in the locking position, moments and forces will be properly taken up if the stanchion 1 is loaded outwardly or inwardly when in use. precisely the area where the catch 3 is mounted has been found sensitive to stresses in known platform stanchions. By the now described construction of the slide member 11 and the sealing member 8, the tooth-shaped projection 21 is surrounded by structural material when in locking position, this providing good resistance in the mounting area of the catch 3.

It is further seen from Fig. 9 that the slide member 11 fills the major part of the channel 9 also at the centre of the stanchion 1. As previously mentioned, the slide member 11 also has in this area means for engaging the spring 16.

The sealing member 8 has many different functions. As already pointed out, it contributes to a good force absorption at the catch 3 and also forms an abutment to the spring 16. Moreover, the sealing 8 forms a mounting for the catch 3, and has an internal shoulder constituting a stop to the slide member 11 when in its lower position, as appears from Fig. 3. Of course, the sealing member 8 also has a sealing function, and so its opening 23 outwards should be as small as possible with respect to the catch 3.

Figs 4-6 and Fig. 10 show how the platform stanchion 1 according to the invention is intended, in a manner known per se, to be detachably fixed on an edge portion 24 of a platform, as schematically illustrated. For fixing the stanchion 1, the channel 10 is passed onto a stanchion attachment 25 (Fig. 10). The attachment 25, which is T-shaped in cross-section, has external engagement means mating with internal engagement means in the channel 10. In such mounting, a play often arises in the known devices between the stanchion 1 and the attachment 25 owing to tolerance problems. The invention however also provides a solution in this respect, as will be described below.

As appears from Figs 4-5 the handle 5 is articulated to the casing 2 by means of a link 26 and a link attachment 27. The link attachment 27 is pivotally mounted on the aforementioned bearing pin 7 and has a heel 28 placed in a slot 29 formed in the side of the casing 2 facing the edge portion 24 of the platform. When folding the handle 5 inwards from the position shown in Fig. 5 to the position in Fig. 4, the heel 28 is urged out through the slot 28 into engagement with the edge portion 24. In this manner, the entire stanchion 1 is slightly pressed out from the platform edge portion 24, and any play that may arise therebetween is efficiently taken up by the tensioning heel 28.

Since the casing 2 is an easily processed, extruded aluminium section with completed channels 9, 10 and since there is no articulation between the catch 3 and the rest of the actuator mechanism, the platform stanchion 1 becomes very easy to manufacture. The starting structure preferably is an aluminium section according to Fig. 7 having a length corresponding to the height of the platform stanchion 1. Apertures for the handle 5, the sealing member 8 and the bearing pins 4, 7 are easily made by shearing or punching. In the manufacture of known platform stanchions of steel, it has however been necessary to resort to punching, bending and welding, with a consequent need of straightening and grinding.

The locking and actuator mechanism of the stanchion 1 can be mounted entirely from outside, which is done in the following way.

The handle 5 is connected to the slide member 11 with the aid of the articulation means 13. At the same time, the link 26, with the associated link attachment 27, is mounted on the handle 5. The slide member 11 is thereafter inserted in the guide channel 9 from below and the handle 5 is placed in the opening 6 of the casing 2. It is ensured that the upper end portion 14 of the slide member 11 is located opposite the recess 8′ in the longitudinal edge portion of the casing 2 and that the tensioning heel 28 of the link attachment 27 is inserted in the slot 29 of the casing 2. The link attachment 27 is then mounted by driving the bearing pin 7 through the casing 2 and through a bearing hole in the link attachment 27. The spring 16 is then inserted in the guide channel 9 through the recess 8′ (Fig. 11) and engaged with the abutment 17 on the slide member 11. The sealing member 8 is tilted into the recess 8′ against the action of the spring 16 and is fixed by snap action between the grooves 15 and the edges of the recess 8′ (see Fig. 12). Finally, the catch 3 is inserted in the sealing member 8 through the opening 23 to the position shown in Fig. 13, whereupon the bearing pin 4 is driven through the casing 2, the sealing member 8 and a bearing hole in the catch 3. The platform stanchion 1 is now ready for use.

The stanchion 1 according to the invention can be made very light, since light materials can be employed. The casing 2, the catches 3, the links 26 and the link attachments 27 may consist of aluminium, whereas the bearing pins 4, 7 and the pins of the articulations preferably are of steel. The slide members 11 and the sealing members 8 may consist of plastic, preferably a glass-fibre-reinforced nylon material. Advantageously, the handles 5 also consist of plastic.

Although the invention is especially well suited for short platform stanchions of the type discussed by way of introduction, it should be pointed out that the principles of the invention may advantageously be used also for long stanchions, optionally provided with canvas-cover supporting posts etc. The platform stanchion according to the invention can of course be used for holding different types of platform sides and corresponding parts on trucks, railway carriages etc. Nor is the invention restricted to traditional folding platform sides, but is equally well suited for sliding ones.

To conclude, it should be pointed out that the invention is in no way limited to the embodiments described in the foregoing, but several different modifications thereof are conceivable within the scope of the accompanying claims. It is readily understood that the inventive concept is equally applicable to front stanchions with only one handle-operated catch, and also to rear stanchions with two handle-operated catches for the sideboard and the tailboard, respectively. A particular advantage of the invention is that front stanchions and rear or corner stanchions can be so designed that they are not restricted for use to the left or to the right side. A corner stanchion may preferably be designed completely symmetrical. The stanchion can also be so modified that the catches and the handle are swung in the same vertical plane, this increasing the flexibility according to which platform sides should be folded down. The function of the slide member remains, but its upper end portion then is rotated 90°.

## Claims

1. A platform stanchion for maintaining platform sides in an upright position of use, said stanchion (1) having at its lower end means (10) for detachable connection with a stanchion attachment (25) on a platform edge portion (24), said stanchion (1) comprising a tubular casing (2) with at least one locking means (3) which is pivotally mounted thereon and which in said position of use or locking position has been swung out from the casing (2) and engages in a locking recess in the adjoining edge portion of the platform side, and which in an inoperative position has been swung inwards into the casing (2) out of engagement with the locking recess for releasing the platform side; and at least one handle (5) which is mounted on the casing (2) and which can be folded inwards and outwards for operating the locking means (3) by means of an actuator mechanism provided within the casing (2) between said locking means (3) and said handle (5), **characterised** in that the actuator mechanism comprises a slide member (11) which is displaceably arranged within and guided by a guide channel (9) in the casing (2), and which has a first end portion (12) connected to the handle (5), and a second end portion (14) disposed adjacent said locking means (3) and adapted, by cam action and without any articulation, to operate the locking means between a swung-out locking position and a swung-in releasing position, said slide member (11) being slidable in said guide channel (9) for operating the locking means (3) between said positions upon actuation of the handle (5).

2. Platform stanchion as claimed in claim 1, wherein said first end portion (12) of the slide member (11) is articulated to the handle (5), said second end portion (14) of the slide member (11) comprising a free end having a first cam surface (19) for engaging a corresponding first cam surface (20) on the locking means (3), and a recess (22) whose inner boundary surfaces form second cam surfaces for engaging corresponding second cam surfaces on a tooth-shaped projection (21) of the locking means (3), said first cam surfaces (19, 20) engaging each other when the locking means (3) is swung out, while said second cam surfaces engage each other when the locking means (3) is swung in, the tooth-shaped projection (21) of the locking means (3), when in locking position, extending into the recess (22) in the second end portion (14) of the slide member (11).

3. Platform stanchion as claimed in claim 1 or 2, wherein the locking means (3) is provided in a recess (8′) which is formed in a longitudinal edge portion of the casing (2) and in which is mounted a sealing member (8) traversed by a bearing pin (4) on which the locking means (3) is pivotally mounted and which is connected to the casing (2), said sealing member (8) having an opening (23) through which a portion of the locking means (3) projects when in locking position.

4. Platform stanchion as claimed in claims 2 and 3, wherein said second end portion (14) of the slide member (11) has such cross-sectional dimensions that it substantially fills, together with a part of the sealing member (8), the guide channel (9) in the area of the locking means (3) for ensuring a reliable guiding function, said recess (22) in said second end portion (14) of the slide member (11) having such cross-sectional dimensions that the tooth-shaped projection (21) of the locking means (3) substantially fills the recess (22) in locking position.

5. Platform stanchion as claimed in claim 3 or 4, wherein the handle (5) is spring-loaded by means of a spring (16) disposed in the guide channel (9) and mounted between a shoulder (17) on the slide member (11) and an abutment (18) formed on the sealing member (8) and extending into the guide channel (9).

6. Platform stanchion as claimed in any one of the preceding claims, wherein the handle (5) is connected to the casing (2) by means of a link (26) and a link attachment (27) which is mounted on a bearing pin (7) connected to the casing (2), and which has a heel (28) disposed in a slot (29) in the casing (2) on the side thereof facing said platform edge portion (24), said heel (28), when the handle (5) is in the folded-in position, i.e. in the operative position or position of use, projects from the slot (29) so as to be applied against the platform edge portion (24) in order to take up any play that may exist between the stanchion (1) and the platform edge portion (24).

7. Platform stanchion as claimed in any one of the preceding claims, wherein the casing (2) is an extruded aluminium section formed as a single piece.

8. Platform stanchion as claimed in any one of claims 3-7, wherein the sealing member (8) consists of plastic, preferably a glass-fibre-reinforced nylon material, said sealing member (8) having grooves (15) for snap engagement with the edges of said recess (8′) in the casing (2).

9. Platform stanchion as claimed in any one of the preceding claims, wherein the slide member (11) consists of plastic, preferably a glass-fibre-reinforced nylon material.

10. Method of mounting from outside a locking and actuator mechanism in a platform stanchion as claimed in claim 1, **characterised** by connecting the handle (5) with the aid of an articulation means (13) to an end portion (12) of the slide member (11), inserting the slide member (11) into the guide channel (9) of the casing (2) until a free end portion (14) of the slide member (11) is located opposite a recess (8′) in the longitudinal edge portion of the casing (2), connecting the handle (5) by means of a link mechanism (26, 27) to the casing (2), inserting a spring (16) into the guide channel (19) through the recess (8′) and applying it against a shoulder (17) on the slide member (11), pressing a sealing member (8) into the recess (8′) against the action of the spring (16) and fixing it by snap action in the recess (8′), placing the locking means (3) in an opening (23) in the sealing member (8) adjacent said free end portion (14) of the slide member (11), and driving a bearing pin (4) for the locking means (3) through the casing (2), the sealing member (8) and a bearing hole in the locking means (3).

## Patentansprüche

1. Runge für eine Ladefläche, zum Halten von Ladefläche-Seitenwänden in einer aufrechten Benutzungsanordnung, wobei die Runge (1) an ihrem unteren Ende Mittel (10) aufweist zum ein Abnehmen zulassenden Befestigen an einer an einem Randabschnitt (24) der Ladefläche vorgesehenen Rungenbefestigung (25), und die Runge ein röhrenartiges Gehäuse (2) aufweist mit wenigstens einem Schließmittel (3), das drehbar daran angeordnet ist und das in der erwähnten Benutzungsanordnung oder der Schließstellung aus dem Gehäuse (2) herausgedreht ist und in eine Schließausnehmung im angrenzenden Randbereich der Ladeflächen-Seitenwand eingreift und das in einer funktionslosen Stellung in das Gehäuse (2) hineingedreht ist und sich nicht im Eingriff mit der Schließausnehmung befindet, um die Ladeflächen-Seitenwand freizugeben; und wenigstens einen am Gehäuse (2) angeordneten Griff (5), der nach innen und nach außen geklappt werden kann, um das Schließmittel (3) mit Hilfe einer in dem Gehäuse (2) zwischen dem Schließmittel (3) und dem Griff (5) eingesetzten Beeinflussungsvorrichtung zu betätigen, dadurch gekennzeichnet, daS die Beeinflussungsvorrichtung ein Gleitelement (11) umfaßt, das verschiebbar in einem Kanal (9) im Gehäuse (2) angeordnet ist, von dem es geführt wird, und das einen ersten Endabschnitt (12), der mit dem Griff (5) verbunden ist, und einen zweiten Endabschnitt (14) hat, der bis an das Schließmittel (3) heranreicht und der dafür bestimmt und angepaßt ist, durch eine Nockentätigkeit und ohne jede Gelenkverbindung das Schließmittel zwischen einer herausgedrehten Schließstellung und einer hineingedrehten Freigabestellung zu betätigen, wobei das Gleitelement (11) in dem Führungskanal (9) gleitend angeordnet ist, um das Schließmittel (3) durch Betätigen des Griffs (5) in die beiden Stellungen zu überführen.

2. Runge für eine Ladefläche nach Anspruch 1, bei der der erste Endabschnitt (12) des Gleitelements (11) gelenkig mit dem Griff (5) verbunden ist, der zweite Endabschnitt (14) des Gleitelements (11) ein freies Ende aufweist, das eine erste Nockenfläche (19) hat für ein Zusammenwirken mit einer entsprechenden ersten Nockenfläche (20) an dem Schließmittel (3), und eine Ausnehmung (22), deren innere Randflächen weitere zweite Nockenflächen bilden zum Zusammenwirken mit entsprechenden zweiten Nockenflächen an einer zahnförmigen Verlängerung (21) des Schließmittels (3), wobei die ersten Nockenflächen (19, 20) aneinanderliegen, wenn das Schließmittel (3) herausgedreht wird, während die zweiten Nockenflächen aneinanderliegen, wenn das Schließmittel (3) hineingedreht wird, wobei die zahnförmige Verlängerung (21) des Schließmittels (3), wenn sie sich in der Schließstellung befindet, bis in die Ausnehmung (22) im zweiten Endabschnitt (14) des Gleitelements (11) erstreckt.

3. Runge für eine Ladefläche nach Anspruch 1 oder 2, bei der das Schließmittel (3) in einer Ausnehmung (8') vorgesehen ist, die in einem längsgerichteten Rand des Gehäuses (2) ausgebildet ist und in die ein Abdichtungsteil (8) eingesetzt ist, das von einem Tragebolzen (4) durchquert wird, auf dem das Schließmittel (3) drehbar angeordnet ist und der an dem Gehäuse (2) befestigt ist, wobei das Abdichtungsteil (8) eine Öffnung (23) aufweist, durch die ein Teil des Schließmittels (3) heraussteht, wenn es sich in der Schließstellung befindet.

4. Runge für eine Ladefläche nach Anspruch 2 und 3, bei der der zweite Endabschnitt (14) des Gleitelements (11) derartige Querschnittsabmessungen hat, daß es zusammen mit einem Teil des Abdichtungsteils (8) den Führungskanal (9) im Bereich des Schließmittels (3) im wesentlichen ausfüllt, um eine zuverlässige Führungsfunktion zu gewährleisten, wobei die Ausnehmung (22) in dem zweiten Endabschnitt (14) des Gleitelements (11) derartige Querschnittsabmessungen hat, daß die zahnförmige Verlängerung (21) des Schließmittels (3) in der Schließstellung die Ausnehmung (22) im wesentlichen ausfüllt.

5. Runge für eine Ladefläche nach Anspruch 3 oder 4, bei der der Griff (5) durch eine Feder (16) federbelastet ist, die in dem Führungskanal (9) angeordnet ist und zwischen einer Schulter (17) an dem Gleitelement (11) und einem an dem Abdichtungsteil (8) ausgebildeten und sich in den Führungskanal (9) hinein erstreckenden Widerlager (18) eingesetzt ist.

6. Runge für eine Ladefläche nach einem der vorhergehenden Ansprüche, bei der der Griff (5) mit Hilfe einer Schwinge (26) und einer Schwingenbefestigung (27) an dem Gehäuse (2) befestigt ist, wobei letztere auf einem an dem Gehäuse (2) befestigten Tragebolzen (7) angeordnet ist und eine Nase (28) hat, die in einem Schlitz (29) im Gehäuse (2) angeordnet ist, und zwar an der Seite, die dem Ladeflächen-Randabschnitt (24) gegenüberliegt, wobei die Nase (28) dann, wenn sich der Griff (5) in der eingeklappten Stellung, d. h. in der funktionsausübenden Stellung oder aktiven Stellung befindet, über den Schlitz (29) übersteht, um an dem Ladeflächen-Randabschnitt (24) anzuliegen, um jedwedes Spiel aufzunehmen, das zwischen der Runge (1) und dem Ladeflächen-Randabschnitt (24) vorhanden sein sollte.

7. Runge für eine Ladefläche nach einem der vorhergehenden Ansprüche, bei der das Gehäuse (2) ein extrudiertes, einstückig ausgebildetes Aluminiumprofilteil ist.

8. Runge für eine Ladefläche nach einem der Ansprüche 3 bis 7, bei der das Abdichtungsteil (8) aus Kunststoff, vorzugsweise aus einem glasfaserverstärkten Nylon- Material besteht, wobei das Abdichtungsteil (8) zum Einrasten in die Kanten der Ausnehmung 8' im Gehäuse (2) Nuten (15) aufweist.

9. Runge für eine Ladeflächen nach einem der vorhergehenden Ansprüche, bei der das Gleitelelement (11) aus Kunststoff, vorzugsweise aus einem glasfaserverstärkten Nylon-Material besteht.

10. Verfahren zum Montieren einer Schließ- und Beeinflussungsvorrichtung von außen in eine Runge für eine Ladefläche gemäß Anspruch 1, gekennzeichnet durch das Verbinden des Griffs (5) mit Hilfe eines Gelenkmittels (13) mit einem Endabschnitt (12) des Gleitelements (11), durch das Einführen des Gleitelements (11) in den Führungskanal (9) des Gehäuses (2), bis sich ein freier Endabschnitt (14) des Gleitelements (11) gegenüber einer Ausnehmung (8') in dem Längskantenabschnitt des Gehäuses (2) befindet, durch das Befestigen des Griffs (5) mit Hilfe eines Verbindungsmechanismus' (26, 27) an dem Gehäuse (2), durch das Einführen einer Feder (16) in den Führungskanal (19) durch die Ausnehmung (8') und ihr Anlegen an eine Schulter (17) an dem Gleitelement (11), durch das Drücken eines Abdichtungsteils (8) in die Ausnehmung (8') gegen die Kraft der Feder (16) und sein Arretieren in der Ausnehmung (8') durch eine Einrastbewegung, durch das Anordnen des Schließmittels (3) in einer Öffnung (23) in dem Abdichtungsteil (8) neben dem freien Endabschnitt (14) des Gleitelements (11) und durch das Eintreiben eines Tragebolzens (4) für das Schließmittel (3) durch das Gehäuse (2), das Abdichtungsteil (8) und ein Trageloch in dem Schließmittel (3).

## Revendications

1. Montant de plate-forme destiné à maintenir les côtés d'une plate-forme dans une position verticale d'utilisation, ledit montant (1) ayant, à son extrémité inférieure, des moyens (10) destinés à se fixer de façon détachable à une attache de montant (25) prévue sur une partie de bord (24) d'une plate-forme, ledit montant (1) comprenant un corps tubulaire (2) muni d'au moins un moyen de verrouillage (3) qui est monté pivotant sur ce corps et qui, dans ladite position d'utilisation ou position de verrouillage, a été basculé vers l'extérieur du corps (2) et est engagé dans un évidement de verrouillage ménagé dans la partie de bord adjacente du côté de la plate-forme et qui, dans une position inactive, a été basculé vers l'intérieur dans le corps (2), en se dégageant de l'évidement de verrouillage, pour libérer le côté de la plate-forme ; et au moins une poignée (5) qui est montée sur le corps (2) et qui peut être rabattue vers l'intérieur et vers l'extérieur pour actionner le moyen de verrouillage (3) à l'aide d'un mécanisme actionneur prévu dans le corps (2), entre ledit moyen de verrouillage (3) et ladite poignée (5), caractérisé en ce que le mécanisme actionneur comprend un élément coulissant (11) qui est disposé mobile dans une rainure de guidage (9) formée dans le corps et est guidé par cette rainure, et qui possède une première partie d'extrémité (12) reliée à la poignée (5), et une deuxième partie d'extrémité (14) disposée adjacente audit moyen de verrouillage (3) et adaptée pour manoeuvrer le moyen de verrouillage, par une action de came et sans aucune articulation, pour le déplacer entre une position de verrouillage basculée vers l'extérieur et une position de libération basculée vers l'intérieur, ledit élément coulissant (11) pouvant coulisser dans ladite rainure de guidage (9) pour manoeuvrer le moyen de verrouillage (3) entre lesdites positions en réponse à la manoeuvre de la poignée (5).

2. Montant de plate-forme selon la revendication 1, dans lequel ladite première partie d'extrémité (12) de l'élément coulissant (11) est articulée sur la poignée (5), ladite deuxième partie d'extrémité (14) de l'élément coulissant (11) comprenant une extrémité libre qui porte une première surface de came (19) destinée à coopérer avec une première surface de came correspondante (20) portée par le moyen de verrouillage (3), et un évidement (22) dont les surfaces limites intérieures forment des deuxièmes surfaces de came destinées à entrer en prise avec des deuxièmes surfaces de came correspondantes portées par une protubérance (21) en forme de dent du moyen de verrouillage (3), lesdites premières surfaces de came (19, 20) entrant en prise entre elles lorsque le moyen de verrouillage (3) est basculé vers l'extérieur, tandis que lesdites deuxièmes surfaces de came entrent en prise entre elles lorsque le moyen de verrouillage (3) est basculé vers l'intérieur, la protubérance (21) en forme de dent du moyen de verrouillage (3) étant engagée dans l'évidement (22) de la deuxième partie d'extrémité (14) de l'élément coulissant (11) lorsque ce moyen de verrouillage est en position de verrouillage.

3. Montant de plate-forme selon la revendication 1 ou 2, dans lequel le moyen de verrouillage (3) est prévu dans un évidement (8') qui est formé dans une partie de bord longitudinal du corps (2) et dans lequel est monté un élément d'étanchéité (8) traversé par un axe d'articulation (4) sur lequel le moyen de verrouillage (3) est monté pivotant et qui est solidaire du corps (2), ledit élément d'étanchéité (8) présentant une ouverture (23) à travers laquelle une partie du moyen de verrouillage (3) émerge dans la position de verrouillage.

4. Montant de plate-forme selon les revendications 2 et 3, dans lequel ladite deuxième partie d'extrémité (14) de l'élément coulissant (11) a des dimensions de section telles qu'avec une partie de l'élément d'étanchéité (8), il remplisse sensiblement la rainure de guidage (9) dans la région du moyen de verrouillage (3) pour assurer une fonction de guidage fiable, ledit évidement (22) de ladite deuxième partie d'extrémité (14) de l'élément coulissant (11) ayant des dimensions de section telles que la protubérance (21) en forme de dent du moyen de verrouillage (3) remplisse sensiblement l'évidement (22) dans la position de verrouillage.

5. Montant de plate-forme selon la revendication 3 ou 4, dans lequel la poignée (5) est chargée élastiquement au moyen d'un ressort (16) disposé dans la rainure de guidage (9) et monté entre un épaulement (17) prévu sur l'élément coulissant (11) et une butée (18) formée sur l'élément d'étanchéité (8) et qui est engagé dans la rainure de guidage (9).

6. Montant de plate-forme selon une quelconque des revendications précédentes, dans lequel la poignée (5) est reliée au corps (2) à l'aide d'une biellette (26) et d'une attache de biellette (27) qui est montée sur un axe d'articulation (7) solidaire du corps (2) et qui présente un talon (28) disposé dans une fente (29) ménagée dans le corps (2) sur le côté de ce corps qui est dirigé vers ladite partie de bord (24) de la plate-forme, et, lorsque la poignée (5) est dans la position rabattue vers l'intérieur, c'est-à-dire dans la position active ou d'utilisation, ledit talon (28) émerge de la fente de manière à être pressé contre la partie de bord (24) de la plate-forme de manière à reprendre le jeu éventuel qui peut exister entre le montant (1) et la partie de bord (24) de la plate-forme.

7. Montant de plate-forme selon une quelconque des revendications précédentes, dans lequel le corps (2) est un profilé en aluminium extrudé formé d'une seule pièce.

8. Montant de plate-forme selon une quelconque des revendications 3 à 7, dans lequel l'élément d'étanchéité (8) est composé de matière plastique, de préférence de nylon renforcé de fibre de verre, ledit élément d'étanchéité (8) présentant des rainures (15) destinées à entrer en prise par encliquetage avec les bords dudit évidement (8') ménagé dans le corps (2).

9. Montant de plate-forme selon une quelconque des revendications précédentes, dans lequel l'élément coulissant (11) est composé d'une matière plastique, de préférence de nylon renforcé de fibres de verre.

10. Procédé pour monter de l'extérieur un mécanisme de verrouillage et actionneur dans un montant de plate-forme selon la revendication 1, caractérisé en ce qu'on assemble la poignée (5) à une partie d'extrémité (12) de l'élément coulissant (11) à l'aide d'un moyen d'articulation, on insère l'élément coulissant (11) dans la rainure de guidage (9) du corps (2) jusqu'à ce qu'une partie d'extrémité libre (14) de l'élément coulissant (11) soit placée face à un évidement (8') de la partie de bord longitudinal du corps (2), on assemble la poignée (5) au corps (2) à l'aide d'un mécanisme à biellette (26, 27), on insère un ressort (16) dans la rainure de guidage (19) à travers l'évidement (8') et on l'applique contre un épaulement (17) de l'élément coulissant (11), on enfonce un élément d'étanchéité (8) dans l'évidement (8') à l'encontre de l'action du ressort (16) et on le fixe par encliquetage dans l'évidement (8'), on place le moyen de verrouillage (3) dans une ouverture (23) ménagée dans l'élément d'étanchéité (8) à proximité de ladite partie d'extrémité libre (14) de l'élément coulissant (11) et on enfonce un axe d'articulation (4) du moyen de verrouillage (3) à travers le corps (2), l'élément d'étanchéité (8) et un trou d'articulation ménagé dans le moyen de verrouillage (3).
